# EUROPÄISCHE PATENTSCHRIFT

(11) **EP 0 435 818 B1**
(45) Veröffentlichungstag und Bekanntmachung des Hinweises auf die Patenterteilung: **15.06.1994**
(21) Anmeldenummer: 90810856.6
(22) Anmeldetag: 07.11.1990
(51) Int. Cl.: B23K 26/14

(54) **Vorrichtung zum Schweissen und/oder Beschichten von Werkstücken, Düse für eine derartige Vorrichtung sowie Manipulator für die Düse einer derartigen Vorrichtung**
Device for welding and/or coating workpieces, nozzle for such device as well as manipulator for such device nozzle
Dispositif pour le soudage et/ou le recouvrement de pièce à usiner, base pour un tel dispositif ainsi que manipulateur pour la base d'un tel dispositif

(30) Priorität: 27.12.1989 CH 4658/89
(43) Veröffentlichungstag der Anmeldung: 03.07.1991
(73) Patentinhaber: SULZER INNOTEC AG, CH-8401 Winterthur (CH)
(72) Erfinder: Dekumbis, R., Dr., CH-8050 Zürich-Oerlikon (CH); Wagniere, Jean-Daniel, CH-1004 Lausanne (CH); Marsden, Charles, CH-1018 Lausanne (CH)
(74) Vertreter: Hammer, Bruno, Dr.

(56) Entgegenhaltungen:
- DE-A- 3 801 068
- US-A- 4 182 299
- US-A- 4 835 357

## Beschreibung

Die vorliegende Erfindung bezieht sich auf eine Vorrichtung zum Schweissen von Werkstücken oder wenigstens teilweisen Beschichten von Werkstücken, insbesondere zum Beschichten von metallischen Oberflächen von Werkstücken mit einer Laser-Vorrichtung.

Das Schweissen, d.h. Verbinden von metallischen Werkstücken ist kann mit Laserstrahlen, die als Energiequelle erfolgen (MIG / TIG). Das Schweissmaterial kann dabei der entstehenden Schweissnaht pulverförmig zugeblasen oder in Stabform zugeführt werden.

Bisherige derartige Vorrichtungen zum Schweissen mit Laserstrahlen ergeben Schweissnähte nicht gleichförmiger Qualität, sobald die Schweissnähte nicht geradlinig sind sondern komplizierte Kurvenform aufweisen.

Oberflächen von Werkstücken aus einem kostengünstigen und einfach zu verarbeitenden Werkstoff, werden oft verändert bzw. veredelt, um dem Werkstück in bestimmten Bereichen geforderte materialtechnische Eigenschaften zu verleihen, beispielsweise können damit die Lager-, Korrosions- oder Abriebeigenschaften des Teils örtlich verbessert werden (Auftragsschweissen). Dieses Verbessern und Verändern insbesondere der Oberflächeneigenschaften von Werkstücken kann dadurch erfolgen, dass mit einem Laserstrahl z.B. eines CO₂-Lasers, oder eines andern Lasers mit hoher Strahlungsenergie, eine Schicht eines Werkstoffs mit den gewünschten, verbesserten Materialeigenschaften auf die Oberfläche des Werkstücks aufgeschmolzen werden. Der Werkstoff mit den besseren Materialeigenschaften wird dem Arbeitsbereich des Laserstrahls auf der Oberfläche des Werkstücks beispielsweise als Pulver zugeblasen.

Vorrichtungen zum Oberflächenbeschichten von Werkstücken mit Lasern, deren Arbeitsbereich das Beschichtungsmaterial als Pulver zugeblasen wird, vermögen bisher nur einen relativ geringen Teil des Pulvers in die Oberflächenschicht umzuschmelzen. Um eine gute Verbindung zwischen Werkstück und Oberflächenschicht zu schaffen ist es notwendig, die Oberfläche des Werkstücks aufzuschmelzen. Bei bisherigen Vorrichtungen wird das das Material des Werkstücks meist stark aufgeschmolzen, so dass die neue Oberflächenschicht aus dem Beschichtungsmaterial zu stark mit Werkstoff des Werkstücks legiert, d.h. verunreinigt ist, was die Eigenschaften der Oberflächenschicht ungünstig beeinflusst, oder die Anwendungsmöglichkeiten der Beschichtungsvorrichtungen doch stark einschränken kann. Dies kann insbesondere beim Aufbringen von dickeren Schichten, die ein nachheriges mechanisches Bearbeiten zulassen, der Fall sein.

Weiter ist es mit bisherigen Vorrichtungen praktisch nicht möglich, Beschichtungen gleichbleibender Qualität herzustellen, sobald die Schichten kompliziertere Konturen aufweisen, die nicht mit geradlinigen Bewegungen von Laserstrahl und/oder Werkstück hergestellt werden können.

Zu US 4.835.375 beschreibt ein Schweiss-Verfahren für Bleche, bei welchem eine Düse für das Beschichtungsmaterial, mit einer nicht näher beschriebenen Halterung einem Lasersupport befestigt ist. Die Lage der Düse relativ zum Laserstrahl oder Lasersupport kann im Betrieb nicht verändert werden.

Weiter ist es mit bisherigen Vorrichtungen praktisch nicht möglich, Beschichtungen gleichbleibender Qualität herzustellen, sobald die Schichten kompliziertere Konturen aufweisen, die nicht mit geradlinigen Bewegungen von Laserstrahl und/oder Werkstück hergestellt werden können.

Aufgabe der Erfindung ist es, eine Laser-Vorrichtung zu schaffen, mit der Schweissverbindungen verschiedenster Kurvenformen und weitgehend gleichbleibender Qualität auch auf Werkstücken mit komplizierten Körperkonturen auf einfache Art zu erzeugen, ohne dass dafür spezielle Manipulatoren hoher Leistungsfähigkeit für das Werkstück notwendig sind.

Eine weitere Aufgabe der Erfindung ist es, eine Laser-Vorrichtung zum Oberflächenbeschichten (Auftragsschweissen) zu schaffen, welche es erlaubt, auch auf Werksstücken mit komplizierter Oberflächenform, mit einfachen Manipulatoren, wie X-Y-Tischen geringer Leistung, komplizierte Beschichtungsmuster und Schichten weitgehend gleichbleibender Qualität zu erzeugen.

Eine weitere Aufgabe der Erfindung ist es, eine Bewegungsvorrichtung für die Düse, sowie eine Düse für eine Laser-Vorrichtung zu schaffen, welche eine verbesserte Ausbeute des Pulvermaterials es ermöglicht, und welche das Zumischen von Schweisspulver in die Schweissnaht oder Oberflächenschicht, oder das Zublasen von Schutzgas zu minimalisieren erlaubt.

Mit der Lösung dieser Aufgaben wird der Anwendungsbereich der Laser-Vorrichtung erweitert.

Erfindungsgemäss ist eine derartige Vorrichtung durch die Merkmale des unabhängigen Anspruchs 1 gekennzeichnet. Mit einer derartigen Vorrichtung nach der Erfindung ist es zusätzlich möglich, grössere Oberflächen gleichbleibender Qualität und mit gleichbleibenden Eigenschaften herzustellen.

Die abhängigen Ansprüche beziehen sich auf besonders vorteilhafte Ausführungsformen der Erfindung.

Am einfachsten erfolgt die Betrachtung der Einstellung der Düse und ihre Bewegung beim Beschichten in einem rechtwinkligen Koordinatensystem, dessen eine Achse in der Symmetrieachse des Laserstrahls und eine andere Achse in der Bewegungs- bzw. Fahrrichtung des Laserstrahls auf der Werkstückoberfläche zeigt. Die dritte Koordinatenachse verläuft in diesem Fall quer zur Fahrrichtung des Laserstrahls und der Ursprung des Koordinatensystems liegt im Auftreffpunkt der Symmetrieachse des Laserstrahls auf die Werkstücksoberfläche.

Bei dieser Betrachtungsweise ist es unwesentlich, ob sich nur das Werkstück, nur der Laserstrahl oder beide bewegen. Mit der neuen Vorrichtung wird für den Beschichtungvorgang eine Einstellung der Düse gewählt, die im wesentlichen durch die folgenden Grössen bestimmt wird:
- Den Winkel β zwischen der Symmetrieachse des Pulverstrahls der Düse und einer auf der Laserachse senkrecht stehenden Ebene;
- den Winkel α zwischen der Symmetrieachse des Pulverstrahls der Düse und der Ebene die durch den Laserstrahl und die Fahrrichtung des Laserstrahls bestimmt ist;
- den Auftreffpunkt der Symmetrieachse des Pulverstrahls auf der Oberfläche des Werkstücks;
- den Abstand der Austrittsöffnung der Düse in Richtung des Pulverstrahls von der Oberfläche des Werkstücks.

Daneben spielen natürlich die Energie des Laserstrahls im Arbeitsbereich, die Fahrgeschwindigkeit des Laserstrahls auf der Oberfläche des Werkstücks, die Pulverstrahlstärke, bzw. Pulverzufuhrrate, aber auch der Werkstoff des Werkstücks und die Zusammensetzung des Pulvers eine Rolle für die Beschaffenheit der entstehenden Schicht.

Bei der Beschichtung bildet sich auf der Oberfläche des Werkstücks, im Arbeitsbereich des Laserstrahls ein geschmolzener Bereich der Schicht, der auch Bad oder Melting Pool genannt wird. Nach der Erfindung ist es wesentlich, unter welchen Winkeln α und β, aus welcher Distanz und wo, d.h. in welchem Punkt der Pulverstrahl auf das Bad trifft. Mit Vorteil wird die Lage des Pulverstrahls so gewählt, dass seine Symmetrieachse die Oberfläche des Werkstücks in einem Punkt E_{P} (Einstichpunkt des Pulvers) trifft, der vom Schnittpunkt E_{L} (Einstichpunkt des Lasers) der Symmetrieachse des Laserstrahls mit der Oberfläche, einige Millimeter, z.B. typisch bis etwa ± 3 mm entfernt ist. Diese Entfernung wird im wesentlichen durch die Geometrie des Bades bestimmt, die beispielsweise wiederum abhängig ist von der Art des verwendeten Pulvers, der Form und Energie des Laserstrahls, der Stärke des Pulverstrahls und der zu erzeugenden Schichtdicke.

Die Vorrichtung nach der Erfindung erlaubt es nun, die einmal gewählten Werte für die Winkel α und β sowie den Abstand von E_{P} zu E_{L}, sowie den Abstand der Düsenöffnung vom Punkte E_{P}, unabhängig von der Fahrrichtung des Laserstrahls auf der Oberfläche des Werkstücks, weitgehend konstant zu halten. Dies führt zu Oberflächenschichten mit deutlich gleichmässigeren Eigenschaften wie Dicke und Zusammensetzung (Aufmischung).

Die Einstellung der gewählten, beim Beschichten gleichbleibenden Positionen kann beispielsweise mit einer entsprechend programmierten CNC-Steuerung (Computerized Numeric Control), wie sie bei Werkzeugmaschinen verwendet werden, erfolgen. Derartige CNC-Steuerungen sind in der Lage, durch tangentielle Nachführung die einmal gewählten und eingestellten Parameter unabhängig von der Fahrrichtung des Laserstrahls auf der Werkstückoberfläche konstant zu halten.

Die Laser-Vorrichtung zum Schweissen oder Beschichten von Werkstücken weist eine Düse auf, mit der Gas und/oder pulverförmiges Beschichtungsmaterial in den Arbeitsbereich des Laserstrahl geblasen wird. Das Pulver wird zu Schichten auf die Oberfläche des Werkstücks geschmolzen oder dient als verbindendes Schweissmittel beim Verschweissen von Teilen. Laserstrahl und Bewegungsrichtung des Laserstrahls auf der Oberfläche des Werkstücks, sowie Querrichtung zur Bewegungrichtung bestimmen ein Koordinatensystem mit dem Ursprung im Auftreffpunkt des Laserstrahls auf der Oberfläche des Werkstücks. Eine steuer- und einstellbare Vorrichtung hält im Koordinatensystem die Lage der Düse auch bei komplizierten Relativbewegungen von Laserstrahl und Werkstück weitgehend konstant, was erlaubt, Schweissverbindungen und aufgeschweisste Schichten komplizierter Form und weitgehend homogener Qualität herzustellen. Der steuerbare Manipulator für die Düse erlaubt das Einstellen und Konstanthalten der axialen und radialen Lage der Düse gegenüber dem Laserstrahl und seinem Arbeitsbereich mit dem Bad aus flüssigem Schichtmaterial. Die Düse weist eine stufenartige Verengung auf, die von einem ersten zylindrischen Teil zu einem zweiten, engeren zylindrischen Teil überführt.

Die Erfindung wird wohl nur anhand von Beispielen erläutert, bei denen eine Schicht auf die Oberfläche des Werkstücks aufzutragen ist (Auftragsschweissen). Es versteht sich und ist dem Fachmann unmittelbar einleuchtend und selbstverständlich, dass die Vorrichtung auch zum Schutzgas-Schweissen geeignet ist, indem durch die Düse lediglich das Schutzgas, z.B. Helium, Argon, Stickstoff, und das Schweissmaterial z.B. in stabform oder aber auch pulverförmiges Schweisszusatzmaterial mit dem Schutzgas der Schweisstelle zugeblasen wird. Es ist mit der Erfindung auch möglich, auf Werkstücke aus nichtmetallischem Werkstoff wie z.B. Keramik eine metallische oder nichtmetallische Schicht aufzubringen, genauso wie es möglich ist, auf eine metallische Oberfläche eine nichtmetallische Schicht, z.B. eine Keramikschicht aufzubringen.

Die Erfindung wird nachstehend anhand der Figuren näher erläutert.

Es zeigen:
- Fig. 1: schematisch eine erfindungsgemässe Laser-Vorrichtung zum Beschichten von Werkstück-Oberflächen;
- Fig. 2: schematisch eine Vergrösserung des Arbeitsbereichs des Laserstrahls der Laser-Vorrichtung von Fig. 2 auf der Oberfläche des Werkstücks;
- Fig. 3: schematisch eine Aufsicht auf den Arbeitsbereich einer erfindungsgemässen Laser-Vorrichtung;
- Fig. 4: eine schematische Seitenansicht des Arbeitsbereichs der Laser-Vorrichtung von Fig. 3;
- Fig. 5: schematisch das Beispiel eines Manipulators für die Düse;
- Fig. 6: schematisch zwei verschiedene axiale Positionen der Düse gegenüber einem konvergierenden Laserstrahl;
- Fig. 7: den schematischen Querschnitt durch eine Düse mit Querschnittstufe;
- Fig. 8: schematisch einen Portalroboter mit sog. fliegender Optik für den Laserstrahl und mit einem einfachem Manipulator für das Werkstück.

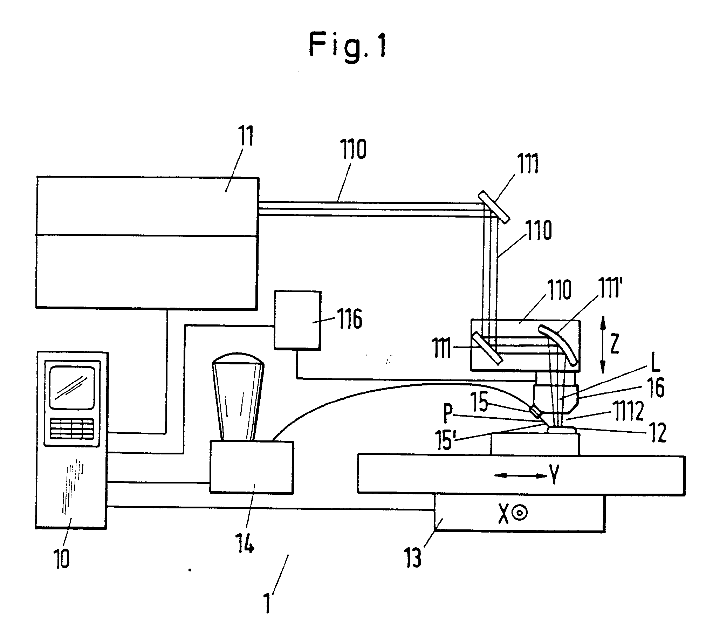

Fig. 1 zeigt die Laser-Vorrichtung 1 zum Beschichten von Oberflächen von Werkstücken. Die CNC-Steuerung 10 steuert den CO₂-Laser 11. Der Laserstrahl 110 wird über eine Laseroptik 111 auf das Werkstück 12 gelenkt. Der letzte Spiegel 111′ der Laseroptik 111 ist als Hohlspiegel z.B. Parabolspiegel ausgebildet und fokussiert den Laserstrahl 110 auf den Arbeitsbereich 1112 des Werkstücks 12. Das Werkstück 12 liegt auf dem in drei Koordinatenrichtungen bewegbaren Bewegungstisch 13 befestigt, dessen Bewegungen von der CNC-Steuerung bestimmt werden.

Der CNC-gesteuerte Pulverförderer 14 bläst vorzugsweise mit einem Schutzgas wie He, Ar, N₂, Metall-Beschichtungspulver durch z.B. einen Schlauch, der einen Wärmeschutz aufweist, zur Düse 15 und durch diese in einem Pulverstrahl 15′ zum Bad im Arbeitsbereich 1112 des Laserstrahls 110 auf dem zu beschichtenden Werkstück 12. Die Position der Düse 15 wird ebenfalls mit der CNC-Steuerung 10 bestimmt und eingestellt. Die Düse 15 ist am Manipulator 16 befestigt mit dem sie um den Laserstrahl drehbar und in der Strahlrichtung verschiebbar ist. Die Signale der CNC-Steuerung 10 werden mit Vorteil über ein Interface 116 dem Manipulator 16 zugeführt.

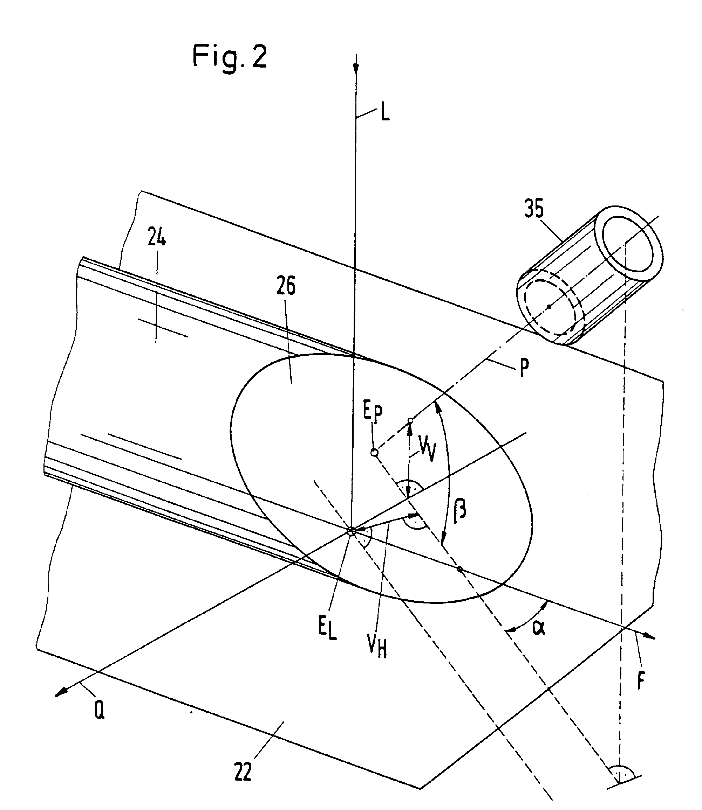

Auf Fig. 2 sind Einzelheiten zur gegenseitigen Lage von Laserstrahl L und Pulverstrahl P zu erkennen. Die Pulverachse P trifft oberhalb der FQ-Ebene 22 auf die LQ-Ebene, sie ist hier um einige Millimeter nach oben von der Oberfläche des Werkstücks 22 versetzt (Vertikal-Versatz V_{V}). Gleichzeitig ist der Pulverstrahl P um den Abstand V_{H} von der Laseachse versetzt (Horizontal-Versatz V_{H}). Damit wird erreicht, dass der Pulverstrahl P direkt auf den mittleren Teil des Bades 26 der Schicht 24, die Schweissraupe, gerichtet ist. Die Winkel des Pulverstrahls P zur FQ-, bzw. FL-Ebene sind mit β, bzw. α bezeichnet. Die CNC-Steuerung ist so programmiert, dass beispielsweise die gegenseitige Lage zwischen Pulverstrahl P, Laserstrahl L und Werkstück 22 jederzeit wenigstens angenähert eingehalten sind. Der Abstand der Öffnung der Düse 25 zur Oberfläche des Bades 26 liegt, in Strahlrichtung, typisch in einem Bereich von 3 bis 40 mm.

Der Vertikal-Versatz V_{V} kann, bezogen auf die FQ-Ebene, je nach der Wahl des Winkels β im Bereich von etwa -1 und +9 mm liegen. Der Horizontal-Versatz V_{H} liegt, bezogen auf die Ebene die durch den Ursprung verläuft, typisch im Bereich von etwa ± 3 mm. Die Schichtdicken, die auf die Oberfläche des Werkstücks aufgebracht werden, liegen gewöhnlich im Bereich von Bruchteilen eines Millimeters und wenigen Millimetern, z.B. zwischen 0.2 und 2 mm.

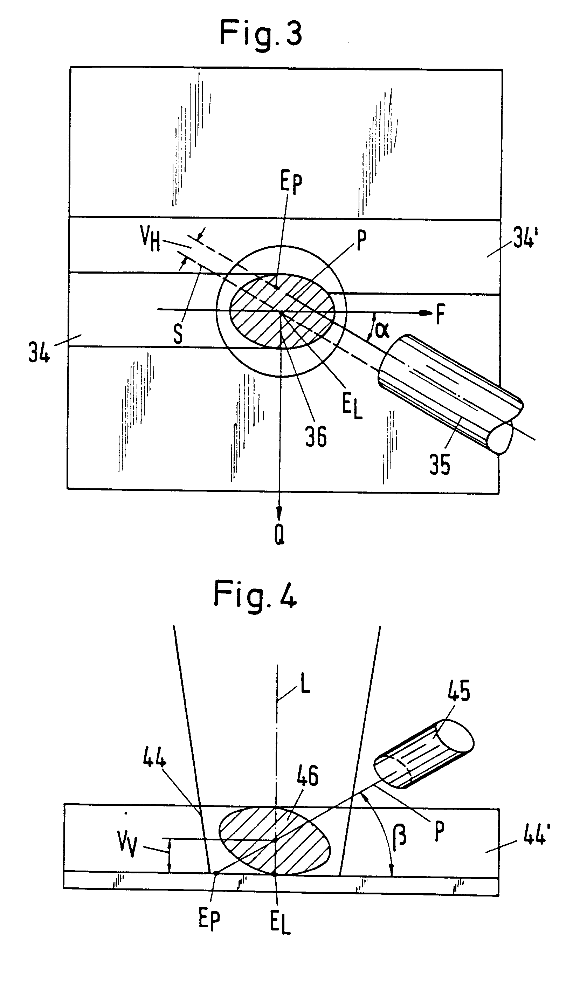

In der Aufsicht von Fig. 3 ist die Pulverdüse 35 und der Pulverstrahl P gezeigt, der um den Horizontal-Versatz V_{H} gegenüber der Laserachse verschoben ist. Damit wird erreicht, dass der Pulverstrahl P zentraler auf das flüssige Bad 36 der Oberflächenschicht oder Raupe 34 trifft, was zur verbesserten Qualität der Beschichtung beiträgt. Die Schicht 34 ist überlappend, parallel zur Raupe oder Schicht 34′ auf die Oberfläche des Werkstücks 32 aufgetragen.

In der Seitenansicht von Fig. 4 ist der Vertikal-Versatz V_{V} des Pulverstrahls P der Düse 45 gut ersichtlich. Das flüssige Bad 46 der Oberflächenschicht im Arbeitsbereich des Laserstrahls L, wird vom Pulverstrahl P der Düse 45 zentral getroffen. Damit wird das Pulver im Pulverstrahl P mit besserem Wirkungsgrad zur Raupe oder Oberflächenschicht 44 geschmolzen, was eine verbesserte Materialausbeute bedeutet.

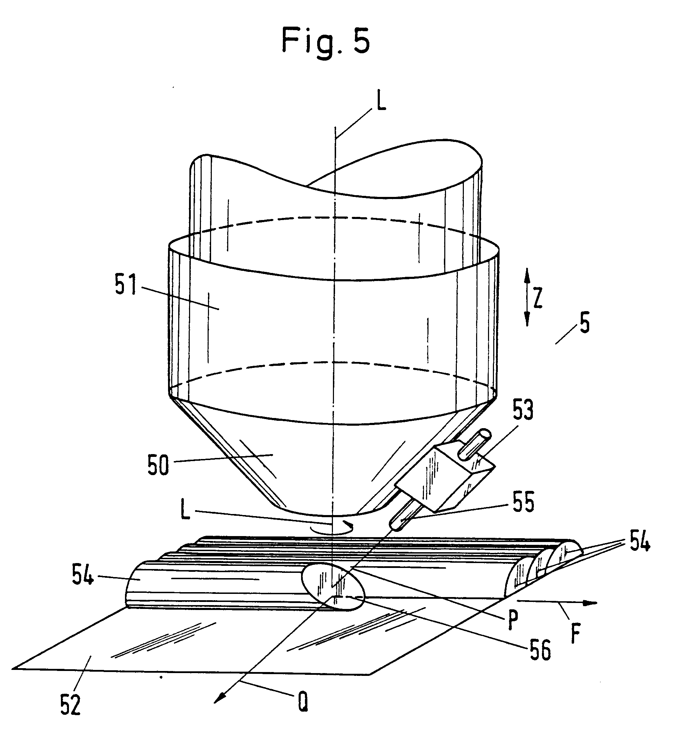

Der schematisch gezeigte Manipulator von Fig. 5 ist ringförmig ausgebildet und um den Laserstrahl L angeordnet. Am konischen Teil 50 des Aussenring 51 ist die Düse 55 in der Halterung 53 befestigt. Der Pulverstrahl P ist auf das Bad 56 gerichtet. Die Drebewegung und die Axialbewegung des Aussenrings 51 kann beispielsweise mit Schrittmotoren oder Gleichstrommotoren erzeugt werden. Die Schichten 54 sind hier überlappend auf die Oberfläche 12 des Werkstücks aufgetragen. Die maximale axiale Verschiebung Z liegt mit Vorteil im Bereich von etwa 50 mm. Der Drehwinkel des Aussenrings 51 des Manipulators kann im Bereich von mehr als 360° liegen.

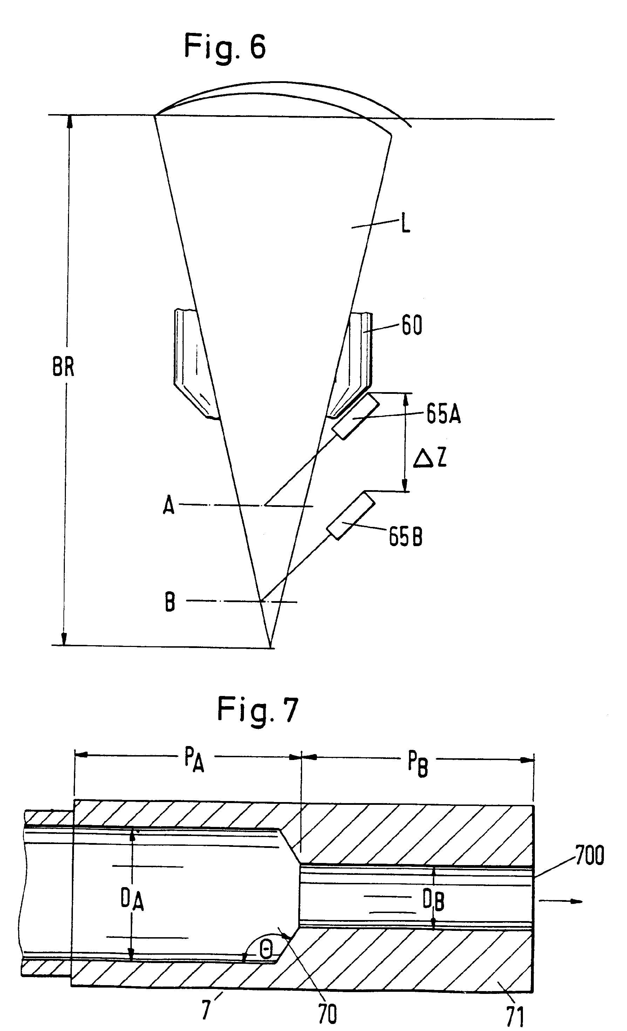

In Fig. 6 sind der konvergierende Laserstrahl L mit der Brennweite BR und zwei verschiedene axiale Positionen A und B des Arbeitsbereichs auf dem Werkstück und die entsprechenden Positionen 65A und 65B der Düse 65 gezeigt. Der Aussenring 60 ist hier nur in der Position A angedeutet.

Die Düse 7 von Fig. 7 verengt sich in der Querschnittstufe 70 vom Querschnitt mit dem Durchmesser D_{A} auf den Querschnitt mit dem Durchmesser D_{B}. Die Düse 7 verengt sich in Strahlrichtung P betrachtet auf einen kreiszylindrischen Teil mit kleinerem Durchmesser D_{B}. Die Verengung erfolgt mit Vorteil unter einem Winkel Θ im Bereich von 90° bis 150°. Der Durchmesser D_{A} kann im Bereich von 1 bis 5 mm liegen. Der engere Durchmesser D_{B} liegt - in Abhängigkeit vom Durchmesser D_{A} - im Bereich von etwa 0.5 bis 2.5 mm. Die Längen P_{A} bzw. P_{B} liegen mit Vorteil in der Grössenordnung von 15 bis 90 mm bzw. 15 bis 120 mm. Als Material für den Düsenkörper 71 ist ein Metall, wie z.B. Kupfer oder Keramik, geeignet. Abhängig von der Geometrie des Düse 7 und der Gestaltung der Verengung der Querschnittstufe 70 ist der Düsenstrahl, d.h. der Pulverstrahl oder der Schutzgasstrahl, mehr oder weniger fokussiert. Es kann auch vorgesehen sein, den Düsenkanal und die Düsenöffnung 700 asymmetrisch im Düsenkörper (71) anzuordnen.

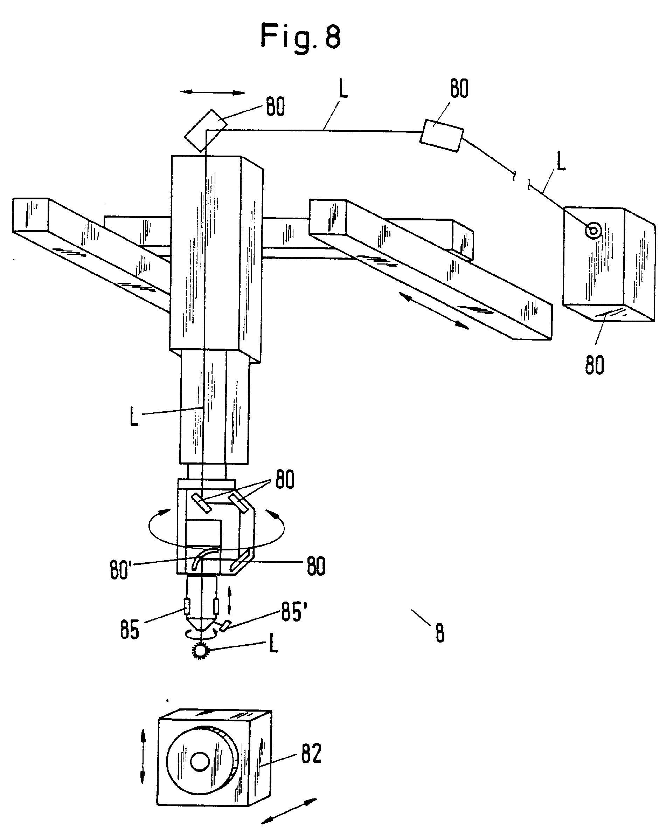

Fig. 8 zeigt eine Laser-Vorrichtung 8 mit fliegender Optik, d.h. die Laserstrahlrichtung ist im Raum in weiten Grenzen richtbar. Der Strahl L des Lasers wird über die Spiegel 80 umgelenkt und schliesslich vom Hohlspiegel 80′ fokussiert. Der Manipulator 85 für die Düse 85′ erlaubt das axiale Verschieben und das Drehen der Düse 85′ um den Laserstrahl L. Die gezeigte Vorrichtung verfügt noch über einen X-Y-Tisch 82 für das Bewegen eines zu bearbeitenden Werkstücks im Arbeitsbereich des Laserstrahls L. Die Bewegungsmöglichkeiten des Lasersystems und des Manipulators sind mit Pfeilen angedeutet.

## Patentansprüche

1. Laser-Vorrichtung (1) zum Schweissen und/oder wenigstens teilweisen Beschichten eines Werkstücks (12), bei der Gas und/oder pulverförmiges Beschichtungsmaterial (15′) mit einer Düse (15), dem Arbeitsbereich des Laserstrahls (110) zugeführt wird, und mit einer Vorrichtung (10, 13) zum relativen gegeneinander Bewegen von Werkstück (12) und Arbeitsbereich des Laserstrahls (110), sowie mit einer Vorrichtung zum Halten der Düse (15), dadurch gekennzeichnet,
dass die Vorrichtung zum Halten der Düse (15) eine Vorrichtung (16, 10, 116) zum Einstellen, Bewegen und Steuern der Lage der Düse (15) gegenüber dem Arbeitsbereich des Laserstrahls (110) und zum weitgehenden automatischen Konstanthalten der Lage der Düse (15) gegenüber der beliebigen, relativen Bewegungsbahn von Werkstück (12) und Laserstrahl (110) in einem Koordinatensystem, bei dem die Symmetrieachse des Laserstrahls (110) eine erste Koordinatenachse (L) und die Richtung der relativen Bewegungsbahn (F) von Werkstück (12) und Laserstrahl (110, L) eine zweite Koordinatenachse des Koordinatensystems bildet,
und dass die Achse (P) des Strahls der Düse (25) nicht durch den Ursprung (E_{L}) eines Koordinatensystems verläuft, das seinen Ursprung (E_{L}) im Auftreffpunkt des Laserstrahls (110, L) auf der Oberfläche des Werkstücks (22) hat.

2. Laser-Vorrichtung (1) nach Anspruch 1, bei welchem die Symmetrieachse des Düsenstrahls (P), in Bewegungsrichtung (F) betrachtet, dem Laserstrahl (110, L) vorläuft und unter einem Winkel in Bewegungsrichtung gerichtet ist.

3. Laser-Vorrichtung (1) nach einem der Ansprüche 1, bei der die Symmetrieachse des Düsenstrahls (P), in Bewegungsrichtung (F) betrachtet, dem Laserstrahl (110, L) nachläuft und unter einem Winkel gegen die Bewegungsrichtung (F) gerichtet ist.

4. Laser-Vorrichtung (1) nach einem der Ansprüche 1 bis 3, bei der das Koordinatensystem rechtwinklig ist und die Symmetrieachse des Strahls (P) der Düse (25) eine Ebene (FQ), die senkrecht zum Laserstrahl (110, L) steht, unter einem Winkel β, der im Bereich von 30° bis 70° liegt, schneidet.

5. Laser-Vorrichtung (1) nach einem der Ansprüche 1 bis 4, bei welcher die Düse (15, 25) und damit die Symmetrieachse des Düsenstrahls (P) mit der Vorrichtung (16) um eine Achse in Richtung des Laserstrahls (110, L) drehbar und der Winkel α der Projektion der Symmetrieachse des Pulverstrahls (P) auf eine zum Laserstrahl (110, L) senkrechten Ebene (FQ) und der Bewegungsrichtung (F) einstellbar ist.

6. Laser-Vorrichtung (1) nach Anspruch 5, bei welcher die Vorrichtung (16) mindestens um einen Winkel α von 360° um die Achse drehbar ist.

7. Laser-Vorrichtung (1) nach einem der Ansprüche 3 bis 6, mit Steuermitteln (10, 116), welche im Betrieb den Winkel α und den Winkel β, sowie den Abstand der Düse (15) zum Arbeitsbereich (1112) des Laserstrahls (110, L), wenigstens angenähert konstant halten.

8. Laser-Vorrichtung (1) nach einem der Ansprüche 1 bis 7, mit einer Vorrichtung (13), zum Bewegen der zu schweissenden und/oder zu beschichtenden Bereiche der Oberfläche des Werkstücks (12) durch den Arbeitsbereich (1112) des Laserstrahls (110, L).

9. Laser-Vorrichtung nach einem der Ansprüche 1 bis 8 mit einer Düse (7) mit einem ersten Bereich (P_{A}) mit zylinderförmigem Verlauf und einem ersten Querschnitt (D_{A}) und mit einer stufenartigen Verengung (70) des Kanalquerschnitts (D_{A}) der Düse (7) auf einen zweiten Bereich (P_{B}) mit kleinerem Kanalquerschnitt (D_{B}) und zylinderförmigem Verlauf.

10. Laser-Vorrichtung nach Anspruch 9 mit einer Düse (7) mit asymmetrischer Anordnung von Kanal und Düsenöffnung (700) im Düsenkörper (71).

11. Laser-Vorrichtung nach einem der Ansprüche 1 bis 10 bei welcher der Manipulator (5) für die Düse (55), eine Durchlass-Öffnung für den Laserstrahl (L) der Laser-Vorrichtung (1) aufweist und mit Mitteln zum Steuern (10, 116) und Bewegen der Düse (55) in Richtung (Z) der Laserstrahlachse und damit zum Einstellen der axialen Lage der Düse (55) zum Laserstrahl (L), und mit Mitteln zum Steuern (10, 116) und Drehen der Düse (55) um den Laserstrahl (L) und damit zum Einstellen der radialen Winkel-Lage der Düse (55) zum Laserstrahl (L).

## Claims

1. Laser device (1) for welding and/or at least partly coating a workpiece (12), in which gas and/or powdery coating material (15′) is/are delivered to the operating area of the laser beam (110) by means of a nozzle (15), with a device (10, 13) for moving the workpiece (12) and the working area of the laser beam (110) relative to one another, and with a device (15) for holding the nozzle, characterised in that the device (15) for holding the nozzle comprises a device (16, 10, 116) for setting, moving and controlling the position of the nozzle (15) with respect to the operating area of the laser beam (110) and for maintaining the position of the nozzle (15) largely constant with respect to any desired relative path of movement of the workpiece (12) and the laser beam (110) in a co-ordinate system, in which the axis of symmetry of the laser beam (110) forms a first co-ordinate axis (L) and the direction of the relative path of movement (F) of the workpiece (12) and the laser beam (110, L) forms a second co-ordinate axis of the co-ordinate system, and in that the axis (P) of the jet from the nozzle (25) does not pass through the origin (E_{L}) of a co-ordinate system whose origin (E_{L}) is at the point of incidence of the laser beam (110, L) on the surface of the workpiece (22).

2. Laser device (1) according to claim 1, characterised in that, considered in the direction of movement (F), the axis of symmetry of the nozzle jet (P) precedes the laser beam (110, L) and extends at an angle to the direction of movement.

3. Laser device (1) according to claim 1 or 2, wherein, considered in the direction of movement (F), the axis of symmetry of the nozzle jet (P) follows the laser beam (110, L) and extends at an angle to the direction of movement (F).

4. Laser device (1) according to one of claims 1 to 3, wherein the co-ordinate system is rectangular and the axis of symmetry of the jet (P) from the nozzle (25) intersects a plane (FQ), which is perpendicular to the laser beam (110, L), at an angle β which is between 30° and 70°.

5. Laser device (1) according to one of claims 1 to 4, wherein the nozzle (15, 25) and thus the axis of symmetry of the nozzle jet (P) can be rotated with the device (16) about an axis in the direction of the laser beam (110, L), and the angle α between the projection of the axis of symmetry of the powder jet (P) on to a plane (FQ), which is perpendicular to the laser beam (110, L), and the direction of movement (F) can be adjusted.

6. Laser device (1) according to claim 5, wherein the device (16) can be rotated about the axis at least through an angle α of 360°.

7. Laser device (1) according to one of claims 3 to 6, characterised in that control means (10, 116) are provided which maintain the angle α, the angle β and the distance of the nozzle (15) from the operating area (1112) of the laser beam (110, L) at least approximately constant during operation.

8. Laser device (1) according to one of claims 1 to 7, comprising a device (13) for moving the surface areas of the workpiece (12) which are to be welded and/or coated through the operating area (1112) of the laser beam (110, L).

9. Laser device according to one of claims 1 to 8, comprising a nozzle (7) with a first area (P_{A}) with a cylindrical shape, a first cross-section (D_{A}) and a step-like narrowing portion (70) of the channel cross-section (D_{A}) to a second area (P_{B}) with a smaller channel cross-section (D_{B}) and a cylindrical shape.

10. Laser device according to claim 9 with a nozzle (7) in which the channel and nozzle orifice (700) are arranged asymmetrically in the nozzle body (71).

11. Laser device according to one of claims 1 to 10 wherein the manipulator (5) for the nozzle (55) comprises a through-opening for the laser beam (L) of the laser device (1), means (10, 116) for controlling and moving the nozzle (55) in the direction (Z) of the laser beam axis and thus for setting the axial position of the nozzle (55) in relation to the laser beam (L), and means (10, 116) for controlling and rotating the nozzle (55) about the laser beam (L) and thus for setting the radial angular position of the nozzle (55) in relation to the laser beam (L).

## Revendications

1. Dispositif à laser (1) pour le soudage et/ou le revêtement au moins partiel d'une pièce (12), dans lequel du gaz et/ou un matériau de revêtement pulvérulent (15′) est amené par une buse (15) dans la zone de travail du faisceau laser (110) et qui comprend un dispositif (10, 13) pour déplacer l'une par rapport à l'autre la pièce (12) et la zone de travail du faisceau laser (110) ainsi qu'un dispositif de maintien de la buse (15), caractérisé en ce que le dispositif de maintien de la buse (15) comporte un dispositif (16, 10, 116) pour régler, déplacer et commander la position de la buse (15) par rapport à la zone de travail du faisceau laser (110) et pour maintenir constante, en grande partie automatiquement, la position de la buse (15) par rapport à un trajet de déplacement relatif quelconque de la pièce (12) et du faisceau laser (110) dans un système de coordonnées dans lequel l'axe de symétrie du faisceau laser (110) forme un premier axe de coordonnées (L), et la direction du trajet de déplacement relatif (F) de la pièce (12) et du faisceau laser (110, L) forme un second axe de coordonnées du système de coordonnées, et en ce que l'axe (P) du jet de la buse (25) ne passe pas par l'origine (E_{L}) d'un système de coordonnées qui a son origine (E_{L}) au point d'impact du faisceau laser (110, L) à la surface de la pièce (22).

2. Dispositif à laser (1) selon la revendication 1, dans lequel l'axe de symétrie du jet (P) de la buse, considéré dans la direction de déplacement (F), se trouve avant le faisceau laser (110, L) et est orienté selon un angle dans la direction de déplacement.

3. Dispositif à laser (1) selon la revendication 1, dans lequel l'axe de symétrie du jet (P) de la buse, considéré dans la direction de déplacement (F), se trouve après le faisceau laser (110, L) et est orienté selon un angle dans le sens opposé à la direction de déplacement (F).

4. Dispositif à laser (1) selon l'une des revendications 1 à 3, dans lequel le système de coordonnées est rectangulaire et l'axe de symétrie du jet (P) de la buse (25) coupe, selon un angle β compris entre 30° et 70°, un plan (FQ) qui est perpendiculaire au faisceau laser (110, L).

5. Dispositif à laser (1) selon l'une des revendications 1 à 4, dans lequel la buse (15, 25) et donc l'axe de symétrie du jet (P) de la buse peuvent tourner, avec le dispositif (16), autour d'un axe en direction du faisceau laser (110, L), et l'angle α compris entre la projection de l'axe de symétrie du jet de poudre (P) sur un plan (FQ) perpendiculaire au faisceau laser (110, L) et la direction de déplacement (F) est réglable.

6. Dispositif à laser (1) selon la revendication 5, dans lequel le dispositif (16) peut être tourné au moins selon un angle α de 360° autour de l'axe.

7. Dispositif à laser (1) selon l'une des revendications 3 à 6, comprenant des moyens de commande (10, 116) qui, pendant l'utilisation, maintiennent au moins approximativement constants l'angle α et l'angle β ainsi que la distance entre la buse (15) et la zone de travail (1112) du faisceau laser (110, L).

8. Dispositif à laser (1) selon l'une des revendications 1 à 7, comprenant un dispositif (13) pour déplacer les zones à souder et/ou à revêtir de la surface de la pièce (12) à travers la zone de travail (1112) du faisceau laser (110, L).

9. Dispositif à laser selon l'une des revendications 1 à 8, comprenant une buse (7) constituée d'une première zone (P_{A}) possédant une forme cylindrique et une première section (D_{A}) et d'un rétrécissement en forme d'étage (70) de la section (D_{A}) du canal de la buse (7) sur une seconde zone (P_{B}) dont la section de canal (D_{B}) est réduite et dont la forme est cylindrique.

10. Dispositif à laser selon la revendication 9, comprenant une buse (7) dont le canal et l'ouverture de buse (700) sont disposés de manière asymétrique dans le corps de buse (71).

11. Dispositif à laser selon une des revendications 1 à 10, dans lequel le manipulateur (5) de la buse (55) comporte une ouverture de passage pour le faisceau laser (L) du dispositif à laser (1) et comprend des moyens pour commander (10, 116) et déplacer la buse (55) dans la direction (Z) de l'axe du faisceau laser et donc pour régler la position axiale de la buse (55) par rapport au faisceau laser (L), et des moyens pour commander (10, 116) et faire tourner la buse (55) autour du faisceau laser (L) et donc pour régler la position angulaire radiale de la buse (55) par rapport au faisceau laser (L).
